# EUROPÄISCHE PATENTANMELDUNG

(11) **EP 2 921 381 A1**
(43) Veröffentlichungstag der Anmeldung: **23.09.2015**
(21) Anmeldenummer: 15156615.5
(22) Anmeldetag: 25.02.2015
(51) Int. Cl.: B62J 15/00, B62J 15/02

(54) **Radschützer für ein Fahrrad**

(30) Priorität: 17.03.2014 DE 202014101199 U
(71) Anmelder: SKS metaplast Scheffer-Klute GmbH, 59846 Sundern (DE)
(72) Erfinder: Kordes, Sven, 59846 Sundern (DE); Grabski, Karsten, 59469 Ense (DE); Wadhorn, Sebastian, 59755 Arnsberg (DE); Fuchs, Patrick, 59769 Arnsberg (DE)
(74) Vertreter: Basfeld, Rainer

(57) **Zusammenfassung**

Radschützer (6) für ein Fahrrad (1), umfassend ein erstes Teil (10), ein zweites Teil (10) und/oder ein drittes Teil (12) wobei das erste Teil (10) auf der radial inneren Seite angeordnet ist und das zweite Teil (11) und/oder das dritte Teil (12) auf der radial äußeren Seite angeordnet sind, sowie Verbindungsmittel für die Verbindung mindestens eines der Teile (10, 11, 12) mit dem Fahrrad (1), wobei an dem ersten Teil (10) angeordnete Verbindungsmittel von dem zweiten Teil (11) und/oder dem dritten Teil (12) so abgedeckt werden, dass sie im am Fahrrad (1) montierten Zustand von der radial äußeren Seite nicht sichtbar sind, und/oder wobei für die Verbindung des ersten mit dem zweiten Teil (10, 11) mindestens ein Befestigungselement vorgesehen ist, das von einem der beiden Teile (10, 11) ausgeht und durch das andere der beiden Teile (10, 11) zumindest teilweise hindurchgreift oder dieses zumindest abschnittsweise hintergreift.

## Beschreibung

Die vorliegende Erfindung betrifft einen Radschützer für ein Fahrrad gemäß dem Oberbegriff des Anspruchs 1 oder dem Oberbegriff des Anspruchs 6 sowie einen Radschützersatz gemäß dem Oberbegriff des Anspruchs 13.

Definition: Der Begriff Verbindungsmittel für die Verbindung mindestens eines der Teile mit dem Fahrrad soll in der vorliegenden Anmeldung weit gefasst sein. Insbesondere soll auch eine Öffnung in einem der Teile als Verbindungsmittel angesehen werden.

Ein Radschützer der eingangs genannten Art ist aus der DE 20 2012 103 260 U1 bekannt. Bei dem darin beschriebenen Radschützer wird ein erstes Teil, das radial innen liegend ist, mit dem Fahrrad verbunden. Ein kürzeres zweites Teil des Radschützers wird radial außen derart an dem zweiten Teil befestigt, dass zwischen den beiden Teilen ein Hohlraum entsteht, durch den in Umfangsrichtung des Rades ein Kabel hindurchgeführt werden kann, insbesondere um eine elektrisch leitende Verbindung von einem Energiespeicher zu einem Antriebsmotor eines Elektrofahrrads zu schaffen.

Als nachteilig bei dem aus dem Stand der Technik bekannten Radschützer erweist sich, dass er die herkömmliche Montage eines Fahrrads erschwert. In der Regel werden Fahrräder in einer Ausrichtung montiert, bei der die Räder nach oben stehen. Weil jedoch bei dem aus der DE 20 2012 103 260 U1 bekannten Radschützer das radial innen liegende Teil mit dem Fahrrad verbunden wird, muss entweder das radial außen liegende, zweite Teil vorab auf das erste Teil aufgebracht werden, was jedoch die Einbringung des Kabels behindert. Oder aber es muss das zweite Teil nach dem Anbringen des radial inneren, ersten Teils an dem ersten Teil befestigt werden, was wegen des minimalen Montageraums ebenfalls sehr aufwendig ist.

Weiterhin nachteilig bei diesem Stand der Technik ist die nur abschnittsweise Abdeckung des radial inneren Teils durch das radial äußere Teil, wodurch beispielsweise Strebenbefestigungen sichtbar bleiben. Weiterhin ist bei der DE 20 2012 103 260 U1 das radial äußere Teil jeweils in seinen Endbereichen durch eine das innere Teil umgreifende Klammer an diesem befestigt. Dies stellt eine vergleichsweise wenig stabile, insbesondere in Umfangsrichtung verschiebbare Verbindung zwischen den beiden Teilen dar.

Das der vorliegenden Erfindung zugrunde liegende Problem ist die Schaffung eines Radschützers der eingangs genannten Art, der einfacher montierbar ist und/oder stabiler ist und/oder ein ansprechenderes Äußeres aufweist. Weiterhin soll ein kostengünstig herstellbarer Radschützersatz mit einem ansprechenden Äußeren geschaffen werden.

Dies wird erfindungsgemäß hinsichtlich des Radschützers durch einen Radschützer der eingangs genannten Art mit den kennzeichnenden Merkmalen des Anspruchs 1 und/oder des Anspruchs 6 sowie hinsichtlich des Radschützersatzes durch einen Radschützersatz der eingangs genannten Art mit den kennzeichnenden Merkmalen des Anspruchs 13 erreicht. Die Unteransprüche betreffen bevorzugte Ausgestaltungen der Erfindung.

Gemäß Anspruch 1 ist vorgesehen, dass Verbindungsmittel für die Anbringung an dem Rahmen des Fahrrads an dem zweiten Teil angeordnet sind. Dadurch kann das den Hohlraum für das Kabel radial außen begrenzende zweite Teil während eines Montagevorgangs zuerst mit Fahrrad verbunden werden. Daran anschließend kann das oder können die Kabel auf das zweite Teil aufgebracht werden, bevor der Hohlraum durch die Aufbringung des diesen radial innen begrenzenden zweiten Teils geschlossen wird. Ein erfindungsgemäßer Radschützer lässt sich somit wesentlich effektiver in den Herstellungsprozess eines Fahrrads, insbesondere eines Elektrofahrrads einbinden.

Es kann vorgesehen sein, dass die Verbindungsmittel eine erste Öffnung für den Hindurchtritt eines Befestigungselements, beispielsweise einer Schraube, aufweisen. Beispielsweise kann dabei die erste Öffnung derart angeordnet sein, dass das Befestigungselement im montierten Zustand eine Verbindung mit der Kettenstrebe des Fahrrads herstellen kann. Vorzugsweise ist die erste Öffnung an dem ersten Teil oder an dem zweiten Teil angeordnet. Auf diese Weise können das erste Teil oder das zweite Teil schnell und einfach vermittels einer Schraube an dem Rahmen des Fahrrads befestigt werden.

Es besteht die Möglichkeit, dass der Radschützer mindestens eine Klammer umfasst, die an dem ersten und/oder an dem zweiten Teil angebracht werden kann. Vorzugsweise kann dabei die Klammer das erste und das zweite Teil miteinander verbinden. Es kann dabei vorgesehen sein, die mindestens eine Klammer oder eine der Klammern Teil der Verbindungsmittel ist und zur Verbindung des zweiten Teils mit dem Rahmen des Fahrrads dient. Beispielsweise können die Verbindungsmittel eine zweite Öffnung für den Hindurchtritt eines Befestigungselements, beispielsweise einer Schraube, aufweisen, die insbesondere an der Klammer angeordnet ist. Die mindestens eine Klammer oder eine der Klammern kann also einerseits die beiden Teile des Radschützers miteinander verbinden und andererseits die Vormontage des zweiten Teils an dem Rahmen des Fahrrads ermöglichen.

Es besteht durchaus die Möglichkeit, den erfindungsgemäßen Radschützer so zu gestalten, dass das den Hohlraum für das Kabel radial innen begrenzende erste Teil während eines Montagevorgangs zuerst mit Fahrrad verbunden werden kann. Dies bietet insbesondere bei dem Vorsehen mindestens einer Klammer für die Verbindung des ersten Teils mit dem zweiten Teil den Vorteil, dass das zweite Teil vergleichsweise schnell und einfach zumindest teilweise von dem ersten Teil abgenommen werden kann. Dadurch kann im Falle einer notwendig gewordenen Wartung schnell auf den Hohlraum beziehungsweise auf das darin untergebrachte mindestens eine Kabel zugegriffen werden.

Gemäß Anspruch 6 ist vorgesehen, dass an dem ersten Teil Verbindungsmittel angeordnet sind, die im miteinander verbundenen Zustand der Teile von dem zweiten Teil und/oder dem dritten Teil so abgedeckt werden, dass sie im am Fahrrad montierten Zustand von der radial äußeren Seite nicht sichtbar sind und/oder dass für die Verbindung des ersten mit dem zweiten Teil mindestens ein Befestigungselement vorgesehen ist, das von einem der beiden Teile ausgeht und durch das andere der beiden Teile zumindest teilweise hindurchgreift oder dieses zumindest abschnittsweise hintergreift. Bei diesen an dem ersten Teil angebrachten Verbindungsmitteln kann es sich beispielsweise um eine Öffnung an dem ersten Teil handeln, durch die insbesondere ein Befestigungsclip für eine Umlaufstrebe hindurchgreifen kann, wobei die Umlaufstrebe im am Fahrrad montierten Zustand beidseitig des Rades in den Nabenbereich geführt und dort befestigt sein kann. Durch die Kaschierung der Öffnung und des durch diese Öffnung hindurchragenden Befestigungsclips wird ein ansprechendes Äußeres des Radschützers geschaffen.

Beispielsweise ist das mindestens eine Befestigungselement als Rastnase an einem der Teile, insbesondere an dem zweiten Teil, ausgebildet und greift zumindest teilweise durch eine Ausnehmung in dem anderen Teil, insbesondere dem ersten Teil, hindurch. Insbesondere ist dabei das mindestens eine Befestigungselement derart gestaltet, dass im miteinander verbundenen Zustand ein Verschieben der beiden Teile in Umfangsrichtung des Rades verhindert wird. Auf diese Weise wird eine stabile, insbesondere in Umfangsrichtung nicht verschiebbare Verbindung zwischen den beiden Teilen gewährleistet.

Es besteht die Möglichkeit, dass der Radschützer ein drittes, mit dem ersten Teil verbindbares Teil aufweist, wobei insbesondere das zweite Teil und das dritte Teil in Umfangsrichtung des Rades beabstandet oder versetzt zueinander an dem ersten Teil befestigbar sind. Auf diese Weise kann die für den Benutzer sichtbare Optik des Radschützers im Wesentlichen durch das zweite und das dritte Teil geprägt werden, die entsprechend hochwertig gestaltet werden können.

Gemäß Anspruch 13 ist vorgesehen, dass ein zweites und/oder drittes Teil des ersten Radschützers einem zweiten und/oder dritten Teil des zweiten Radschützers entspricht, insbesondere diesem gleicht, vorzugsweise genau so wie dieses ausgebildet ist. Auf diese Weise lässt sich einerseits der Radschützersatz einheitlicher und damit optisch ansprechender gestalten. Andererseits können dadurch die Herstellungskosten für den Radschützersatz gesenkt werden, weil für beide Radschützer gleiche Teile verwendet werden können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Seitenansicht eines Fahrrads mit einer ersten Ausführungsform eines erfindungsgemäßen Rad schützersatzes;
- Fig. 2: eine Explosionsansicht eines erfindungsgemäßen Radschützers gemäß Fig. 1 mit einem Teil eines Fahrrads;
- Fig. 3: eine perspektivische Ansicht eines ersten Montageschrittes bei der Anbringung eines erfindungsgemäßen Radschützers gemäß Fig. 1 an einem Fahrrad;
- Fig. 4: eine perspektivische Ansicht eines zweiten Montageschrittes bei der Anbringung eines erfindungsgemäßen Radschützers gemäß Fig. 1 an einem Fahrrad;
- Fig. 5: eine perspektivische Ansicht eines dritten Montageschrittes bei der Anbringung eines erfindungsgemäßen Radschützers gemäß Fig. 1 an einem Fahrrad;
- Fig. 6: eine perspektivische Ansicht eines vierten Montageschrittes bei der Anbringung eines erfindungsgemäßen Radschützers gemäß Fig. 1 an einem Fahrrad;
- Fig. 7: eine perspektivische Ansicht eines fünften Montageschrittes bei der Anbringung eines erfindungsgemäßen Radschützers gemäß Fig. 1 an einem Fahrrad;
- Fig. 8: eine perspektivische Ansicht eines sechsten Montageschrittes bei der Anbringung eines erfindungsgemäßen Radschützers gemäß Fig. 1 an einem Fahrrad;
- Fig. 9: eine perspektivische Ansicht eines siebten Montageschrittes bei der Anbringung eines erfindungsgemäßen Radschützers gemäß Fig. 1 an einem Fahrrad;
- Fig. 10: eine Hinteransicht des an einem Fahrrad angebrachten erfindungsgemäßen Radschützers gemäß Fig. 1;
- Fig. 11: eine Schnittansicht gemäß den Pfeilen XI - XI in Fig. 10;
- Fig. 12: eine Schnittansicht gemäß den Pfeilen XII - XII in Fig. 11;
- Fig. 13: eine Schnittansicht gemäß den Pfeilen XIII - XIII in Fig. 11;
- Fig. 14: eine Detailansicht gemäß dem Pfeil XIV in Fig. 11;
- Fig. 15: eine Seitenansicht eines erfindungsgemäßen Radschützers gemäß Fig. 1 mit einer daran angebrachten Umlaufstrebe;
- Fig. 16: eine Schnittansicht gemäß den Pfeilen XVI - XVI in Fig. 15;

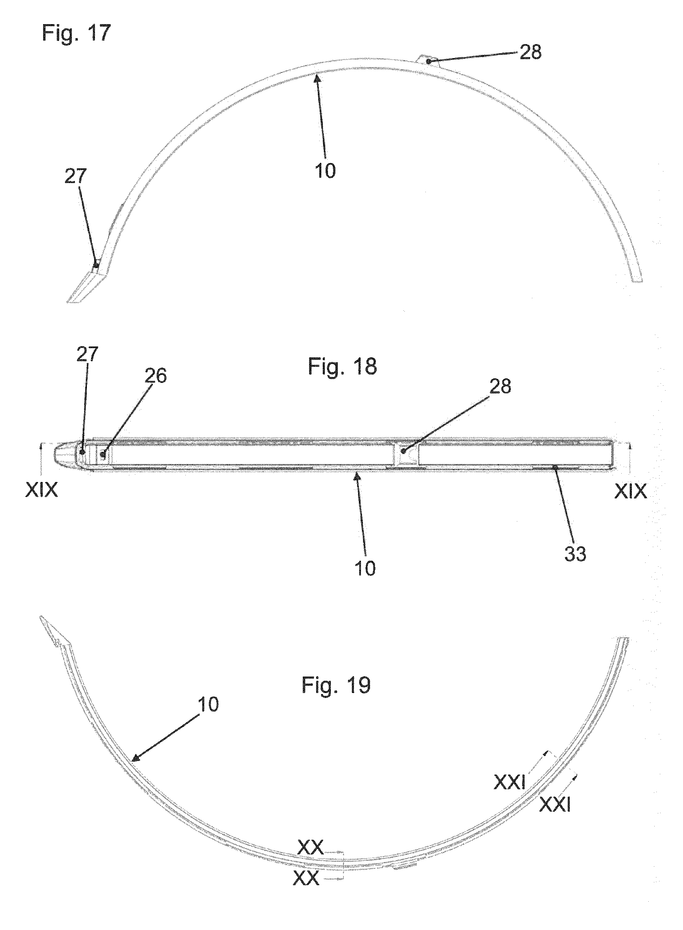

- Fig. 17: eine Seitenansicht eines ersten Teils eines erfindungsgemäßen Radschützers gemäß Fig. 1;
- Fig. 18: eine Draufsicht auf das erste Teil eines erfindungsgemäßen Radschützers gemäß Fig. 17;
- Fig. 19: eine Schnittansicht gemäß den Pfeilen XIX - XIX in Fig. 18;
- Fig. 20: eine Schnittansicht gemäß den Pfeilen XX - XX in Fig. 19;
- Fig. 21: eine Schnittansicht gemäß den Pfeilen XXI - XXI in Fig. 19;
- Fig. 22: eine Seitenansicht eines zweiten Teils eines erfindungsgemäßen Radschützers gemäß Fig. 1;
- Fig. 23: eine Untenansicht auf das zweite Teil eines erfindungsgemäßen Radschützers gemäß Fig. 22;
- Fig. 24: eine Schnittansicht gemäß den Pfeilen XXIV - XXIV in Fig. 23;

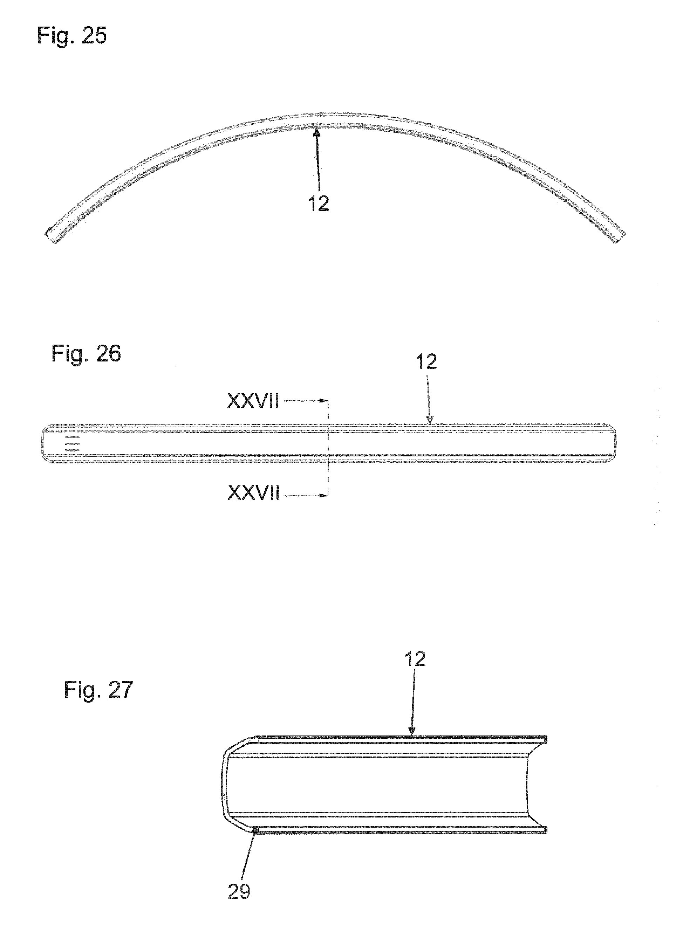

- Fig. 25: eine Seitenansicht eines dritten Teils eines erfindungsgemäßen Radschützers gemäß Fig. 1;
- Fig. 26: eine Untenansicht auf das dritte Teil eines erfindungsgemäßen Radschützers gemäß Fig. 25;
- Fig. 27: eine Schnittansicht gemäß den Pfeilen XXVII - XXVII in Fig. 26;
- Fig. 28: eine Explosionsansicht eines Radschützers eines erfindungsgemäßen Radschützersatzes gemäß Fig. 1 mit einer Umlaufstrebe;
- Fig. 29: eine perspektivische Ansicht des Radschützers eines erfindungsgemäßen Radschützersatzes gemäß Fig. 28;
- Fig. 30: eine Seitenansicht eines Fahrrads mit einer zweiten Ausführungsform eines erfindungsgemäßen Radschützersatzes;
- Fig. 31: eine perspektivische Ansicht eines ersten Montageschrittes bei der Anbringung des Radschützers gemäß Fig. 30 an einem Fahrrad;
- Fig. 32: eine perspektivische Ansicht eines zweiten Montageschrittes bei der Anbringung des Radschützers gemäß Fig. 30 an einem Fahrrad;
- Fig. 33: eine perspektivische Ansicht eines dritten Montageschrittes bei der Anbringung des Radschützers gemäß Fig. 30 an einem Fahrrad;
- Fig. 34: eine perspektivische Ansicht eines vierten Montageschrittes bei der Anbringung des Radschützers gemäß Fig. 30 an einem Fahrrad.

In den Figuren werden gleiche oder funktional gleiche Teile mit gleichen Bezugszeichen versehen.

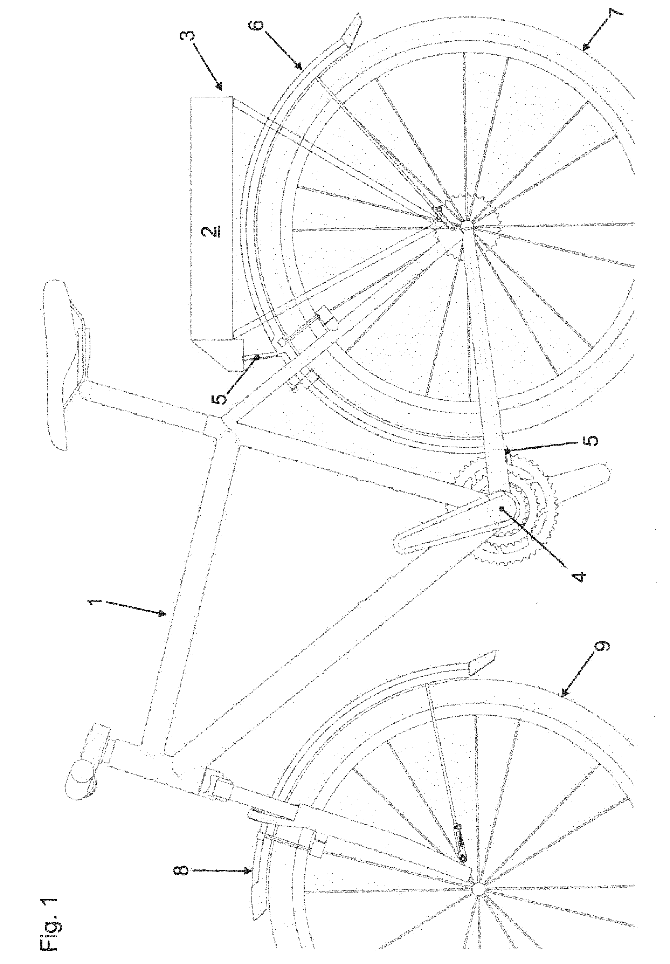

Das in Fig. 1 abgebildete Fahrrad 1 ist als Elektrofahrrad ausgebildet und umfasst einen Energiespeicher 2 im Bereich des Gepäckträgers 3 sowie einen nicht abgebildeten Motor im Bereich des Tretlagers 4. Dementsprechend wird ein Kabel 5 benötigt, das teilweise durch einen erfindungsgemäßen Radschützer 6 hindurchgeführt ist, der an dem Hinterrad 7 montiert ist. Ein weiterer Radschützer 8 eines erfindungsgemäßen Radschützersatzes ist an dem Vorderrad 9 des Fahrrads 1 montiert.

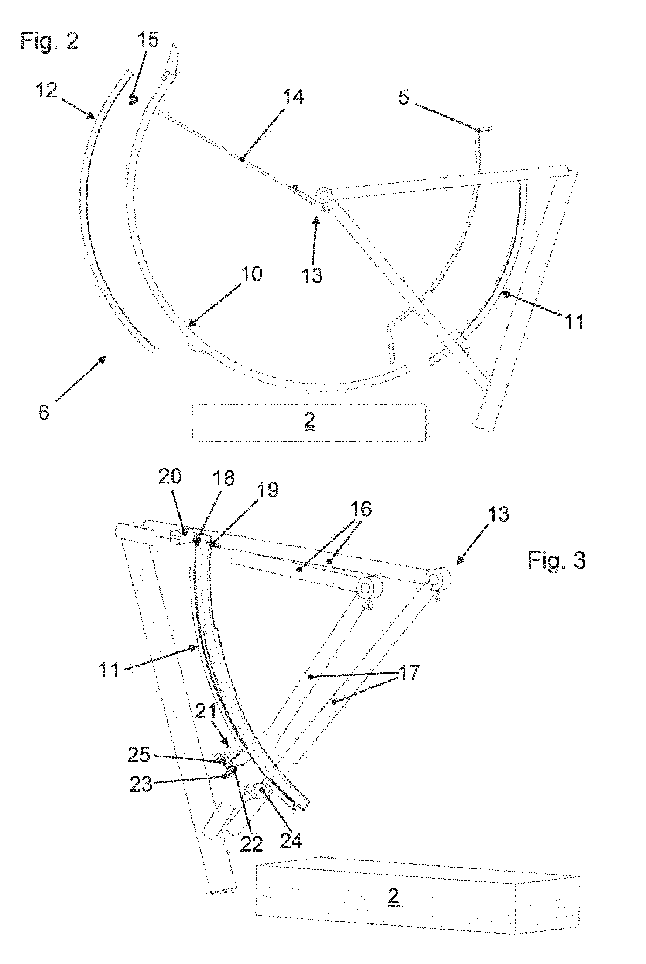

Der für ein Hinterrad 7 geeignete erfindungsgemäße Radschützer 6 umfasst ein radial innen angeordnetes erstes Teil 10, ein radial außen angeordnetes zweites Teil 11 und ein ebenfalls radial außen angeordnetes drittes Teil 12 (siehe Fig. 2). Die drei Teile 10, 11, 12 sind dabei im Wesentlichen torusförmig ausgebildet und in üblicher Weise an die Form und den Radius des Reifens des Hinterrads 7 angepasst.

Das zweite Teil 11 weist im Nachfolgenden detailliert beschriebene Verbindungsmittel für die Verbindung des Radschützers 6 mit dem Fahrrad 1 auf. Weiterhin sind eine im Nabenbereich 13 des Hinterrads anbringbare Umlaufstrebe 14 und ein Befestigungsclips 15 für die Befestigung der Umlaufstrebe 14 an dem ersten Teil 10 aus Fig. 2 ersichtlich.

Die Montage eines erfindungsgemäßen Radschützers 6 an einem Fahrrad 1 erfolgt in der Regel in einer Ausrichtung, bei der die Räder nach oben stehen. Dies ist insbesondere in den Fig. 3 bis Fig. 9 ersichtlich, die nacheinander erfolgende Montageschritte des Radschützers 6 an dem Fahrrad 1 abbilden. Dabei sind jeweils der im Bereich des Gepäckträgers angeordnete Energiespeicher 2 unten und die Kettenstreben 16 sowie der Nabenbereich 13 des Hinterrads oben angeordnet.

Fig. 3 lässt sich entnehmen, dass in einem ersten Montageschritt das zweite Teil 11 mit den Kettenstreben 16 und den Sitzstreben 17 des Fahrrads 1 verbunden wird. Dazu weist das zweite Teil 11 eine Öffnung 18 für den Hindurchtritt einer als Befestigungselement dienenden Schraube 19 auf, die in ein die beiden Kettenstreben 16 verbindendes Teil 20 eingebracht und an diesem festgelegt werden kann. Dazu kann beispielsweise an diesem Teil 20 eine Gewindebohrung vorgesehen sein.

Der Radschützer 6 umfasst weiterhin eine Klammer 21, über die das erste Teil 10 mit dem zweiten Teil 11 verbunden werden kann. Weiterhin weist die Klammer 21 eine mit einer zweiten Öffnung 22 versehene Lasche 23 auf, die der Anbringung an einem die Sitzstreben 17 verbindenden Teil 24 dient. Auch für die Anbringung der Klammer an dem Teil 24 wird eine als Befestigungselement dienende Schraube 25 verwendet, die in das die beiden Sitzstreben 17 verbindende Teil 24 eingebracht und an diesem festgelegt werden kann. Dazu kann beispielsweise an diesem Teil 24 eine Gewindebohrung vorgesehen sein.

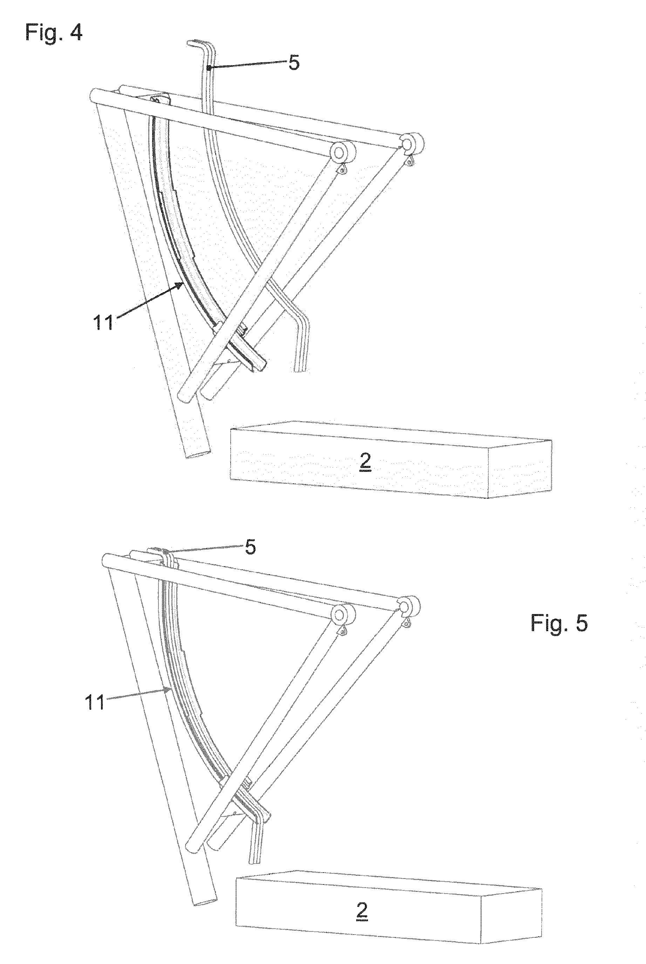

In dem in Fig. 3 abgebildeten ersten Montageschritt wird also das zweite Teil 11 an dem die Kettenstreben 16 verbindenden Teil 20 und an dem Sitzstreben 17 verbindenden Teil 24 angebracht. Fig. 4 zeigt dabei das zweite Teil 11 im bereits angebrachten Zustand. In dem in Fig. 4 und Fig. 5 abgebildeten weiteren Montageschritt wird das mindestens eine Kabel 5 in das zweite Teil 11 eingebracht, das bei der gewählten Montage-Ausrichtung einen nach oben offenen Hohlraum aufweist.

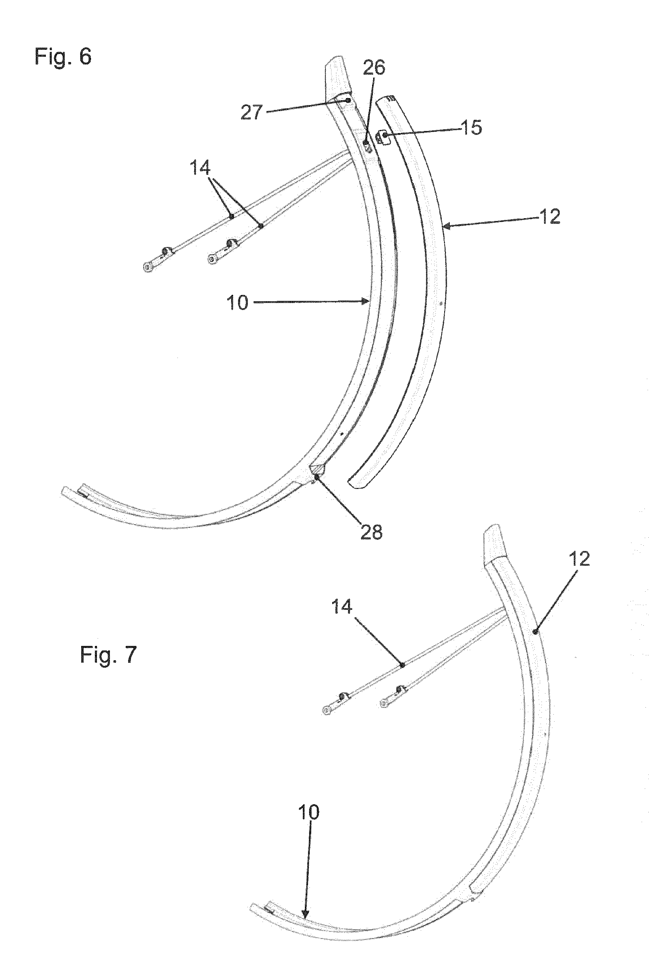

Daran anschließend wird in einem in Fig. 6 abgebildeten Montageschritt die Umlaufstrebe 14 vermittels des Befestigungsclips 15 an dem ersten Teil 10 befestigt. Das erste Teil 10 weist dazu eine Öffnung 26 auf, durch die der Befestigungsclips 15 teilweise hindurchgreifen kann, so dass er auf der radial inneren beziehungsweise in Fig. 6 linken Seite des ersten Teils 10 die Umlaufstrebe 14 hintergreift.

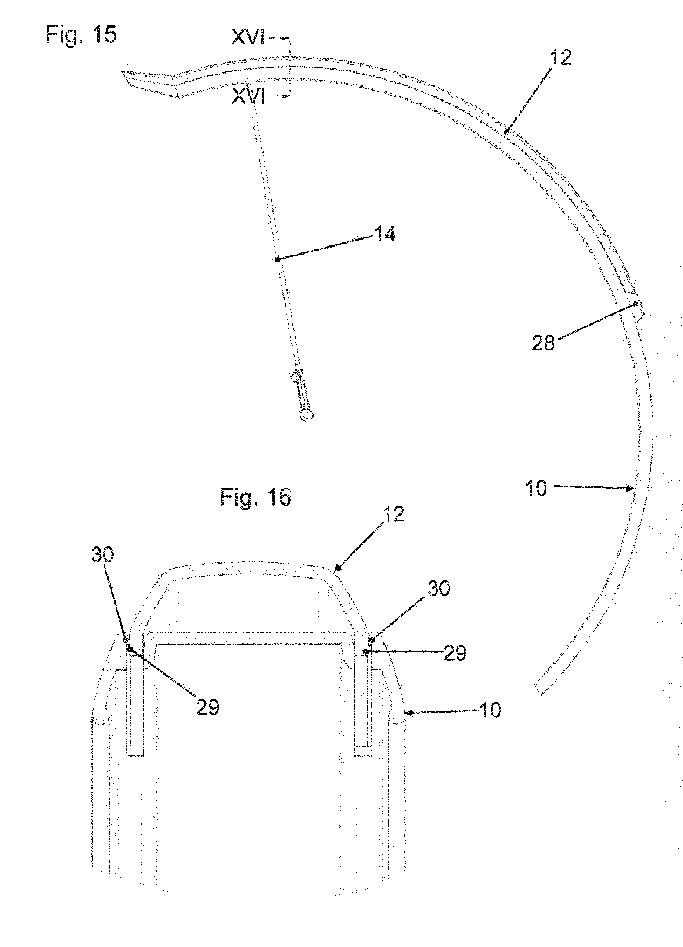

In einem in Fig. 7 abgebildeten weiteren Montageschritt wird das dritte Teil 12 mit dem ersten Teil 10 verbunden, beispielsweise durch Verrasten oder Verclipsen. Das Verclipsen ist aus den Fig. 15 und 16 ersichtlich. Dabei weist das erste Teil 10 an dem in Fig. 6 oberen Ende und etwa in der Mitte jeweils einen radial nach außen ragenden Vorsprung 27, 28 auf, an dem das dritte Teil 12 in Umfangsrichtung anliegt. Durch das aufgebrachte dritte Teil 12 wird der Befestigungsclips 15 kaschiert, so dass sich ein ansprechendes Äußeres des Radschützers ergibt.

Die Verbindung des dritten Teils 12 mit dem ersten Teil 10 ist detailliert aus den Fig. 15 und 16 ersichtlich. Dabei zeigt insbesondere Fig. 16 an dem dritten Teil 12 angeordnete Rastnasen 29, die im verbundenen Zustand der beiden Teile 10, 12 hinter Rastvorsprünge 30 des ersten Teils 10 greifen. Insbesondere können sich dabei die Rastnasen 29 und die Rastvorsprünge 30 in Umfangsrichtung über die gesamte Länge des dritten Teils 12 erstrecken.

Zwischen der radial äußeren Seite des ersten Teils 10 und der radial inneren Seite des dritten Teils 12 ist zwar im verbundenen Zustand ein Hohlraum vorgesehen, obwohl durch diesen Abschnitt des Radschützers kein Kabel geführt werden muss. Es besteht jedoch durchaus die Möglichkeit, das erste Teil 10 und das dritte Teil 12 so zu gestalten, dass im verbundenen Zustand kein derartiger Hohlraum vorhanden ist.

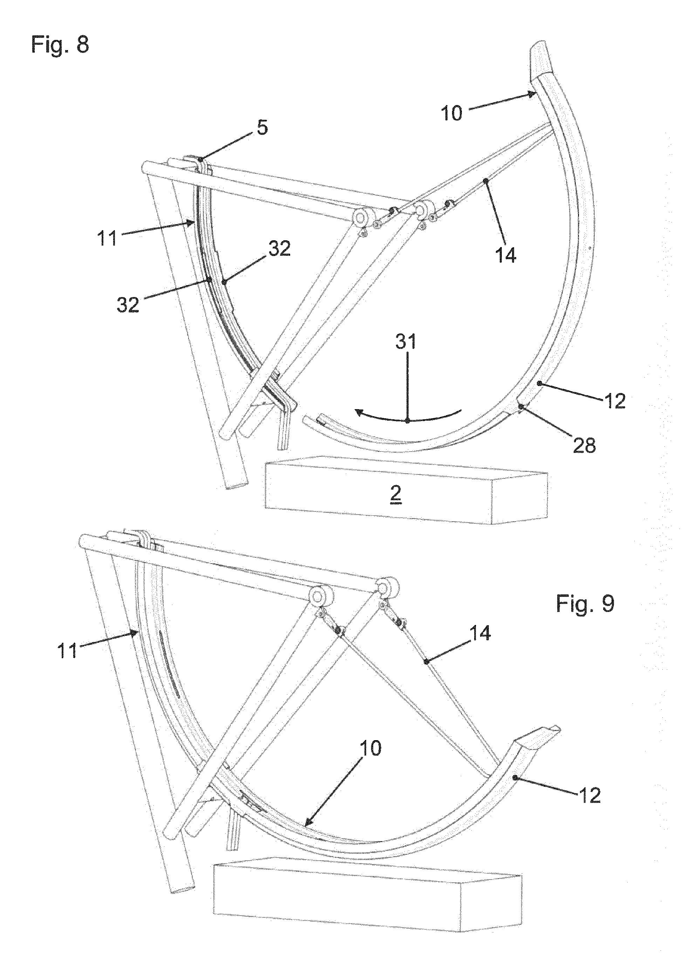

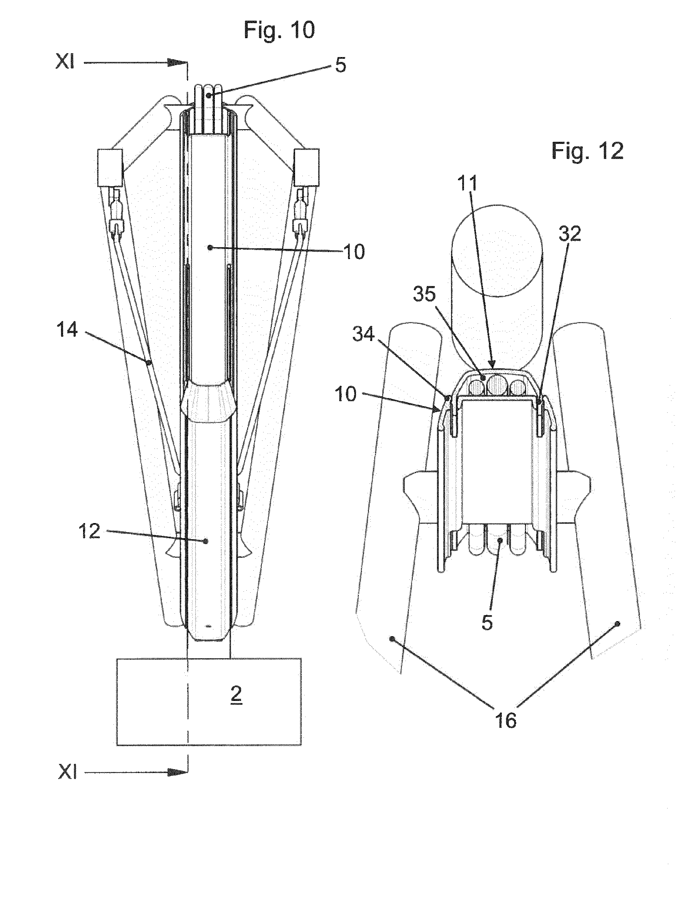

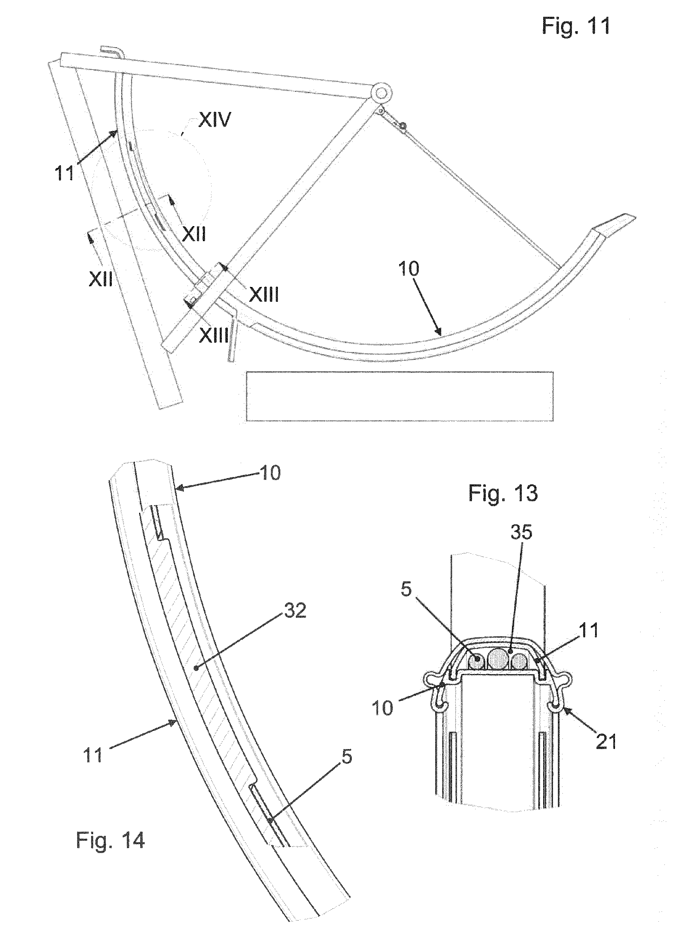

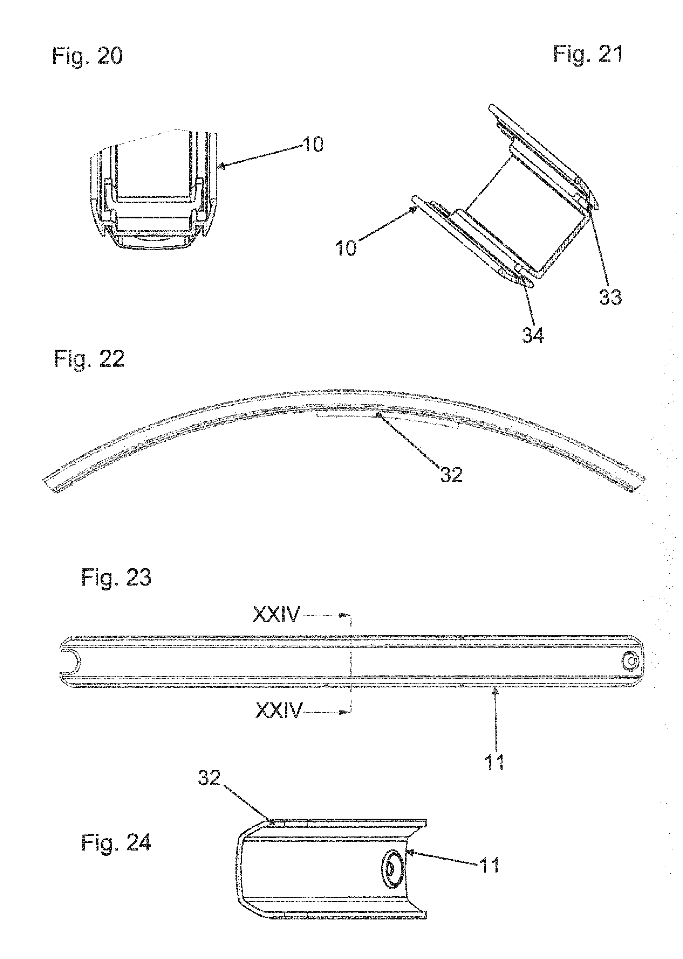

Die Fig. 8 und Fig. 9 zeigen die abschließenden Schritte der Montage. Dabei wird das mit dem dritten Teil 12 und der Umlaufstrebe 14 bestückte erste Teil 10 durch eine Bewegung in Umfangsrichtung beziehungsweise in Richtung des Pfeils 31 in Fig. 8 auf das bereits mit dem Rahmen des Fahrrads verbundene zweite Teil 11 aufgebracht. Dabei greifen sich in Umfangsrichtung über einen Teil des zweiten Teils 11 erstreckende Rastnasen 32 durch entsprechende Ausnehmungen 33 des ersten Teils 10 hindurch und dort hinter entsprechende Rastvorsprünge 34 (siehe dazu Fig. 12, Fig. 14 und Fig. 21). Fig. 14 zeigt dabei deutlich, dass sich die Rastnasen 32 des zweiten Teils 11 in Umfangsrichtung des Rades nur über einen begrenzten Abschnitt erstrecken.

Insbesondere Fig. 12 und Fig. 13 ist entnehmbar, dass zwischen dem ersten Teil 10 und dem zweiten Teil 11 ein Hohlraum 35 für die Hindurchführung eines oder mehrerer Kabel 5 vorgesehen ist. Fig. 13 zeigt weiterhin die Klammer 21, die an der radialen Außenseite des zweiten Teils 11 anliegt und die radiale Innenseite des ersten Teils 10 umgreift, so dass dadurch das erste Teil 10 und das zweite Teil 11 durch Verrasten aneinander festgelegt werden können.

Weiterhin lässt sich Fig. 13 entnehmen, dass in dem Umfangsbereich des Radschützers, in dem die Klammer 21 angeordnet ist, das erste Teil 10 keine Ausnehmungen aufweist, so dass das zweite Teil 11 hier nicht durch das erste Teil 10 hindurchgreift. Durch die abwechselnde Anordnung von Abschnitten, in denen das zweite Teile 11 durch das erste Teil 10 hindurchgreift, und mindestens einem Abschnitt, in dem das zweite Teil 11 durch das erste Teil 10 hindurchgreift, wird im montierten Zustand verhindert, dass sich die beiden Teile 10, 11 in Umfangsrichtung relativ zueinander bewegen.

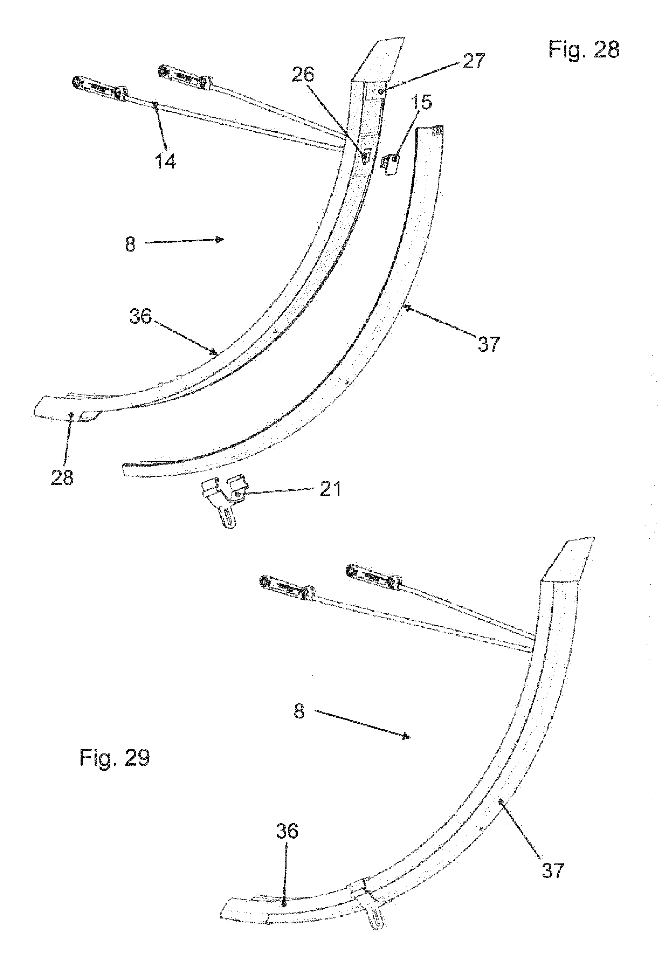

Fig. 28 und Fig. 29 lässt sich der für das Vorderrad vorgesehene Radschützer 8 entnehmen. Auch dieser Radschützer 8 umfasst ein radial innen angeordnetes erstes Teil 36 und ein radial außen angeordnetes drittes Teil 37. Die beiden Teile 36, 37 sind dabei ebenfalls im Wesentlichen torusförmig ausgebildet und in üblicher Weise an die Form und den Radius des Reifens des Vorderrads 9 angepasst.

Insbesondere ist dabei das von dem vorderen Radschützer 8 umfasste dritte Teil 37 genau so gestaltet wie das von dem hinteren Radschützer 6 umfasste dritte Teil 12. Die Teile 12, 37 können somit in dem gleichen Werkzeug kostengünstig hergestellt werden.

Wie bei dem Radschützer 6 für das Hinterrad 7 wird bei dem Radschützer 8 für das Vorderrad 9 die Umlaufstrebe 14 vermittels des Befestigungsclips 15 an dem ersten Teil 36 befestigt. Das erste Teil 36 weist dazu ebenfalls eine Öffnung 26 auf, durch die der Befestigungsclips 15 teilweise hindurchgreifen kann, so dass er auf der radial inneren beziehungsweise in Fig. 28 linken Seite des ersten Teils 36 die Umlaufstrebe 14 hintergreift.

In einem in Fig. 29 abgebildeten weiteren Montageschritt wird das dritte Teil 37 mit dem ersten Teil 36 verbunden, beispielsweise durch Verrasten oder Verclipsen. Bei dem Radschützer 8 für das Vorderrad 9 weist das erste Teil 36 an jedem seiner Enden einen radial nach außen ragenden Vorsprung 27, 28 auf, an dem das dritte Teil 37 in Umfangsrichtung anliegt. Durch das aufgebrachte dritte Teil 37 wird der Befestigungsclips 15 kaschiert, so dass sich ein ansprechendes Äußeres des Radschützers 8 ergibt.

Die Verbindung des dritten Teils 37 mit dem ersten Teil 36 kann bei dem Radschützer 8 für das Vorderrad 9 genau so über Rastnasen und Rastvorsprünge erfolgen wie bei dem Radschützer 6 für das Hinterrad 7.

Zwischen der radial äußeren Seite des ersten Teils 36 und der radial inneren Seite des dritten Teils 37 ist zwar im verbundenen Zustand ein Hohlraum vorgesehen, obwohl durch diesen Abschnitt des Radschützers 8 kein Kabel geführt werden muss. Es besteht jedoch durchaus die Möglichkeit, das erste Teil 36 und das dritte Teil 37 so zu gestalten, dass im verbundenen Zustand kein derartiger Hohlraum vorhanden ist.

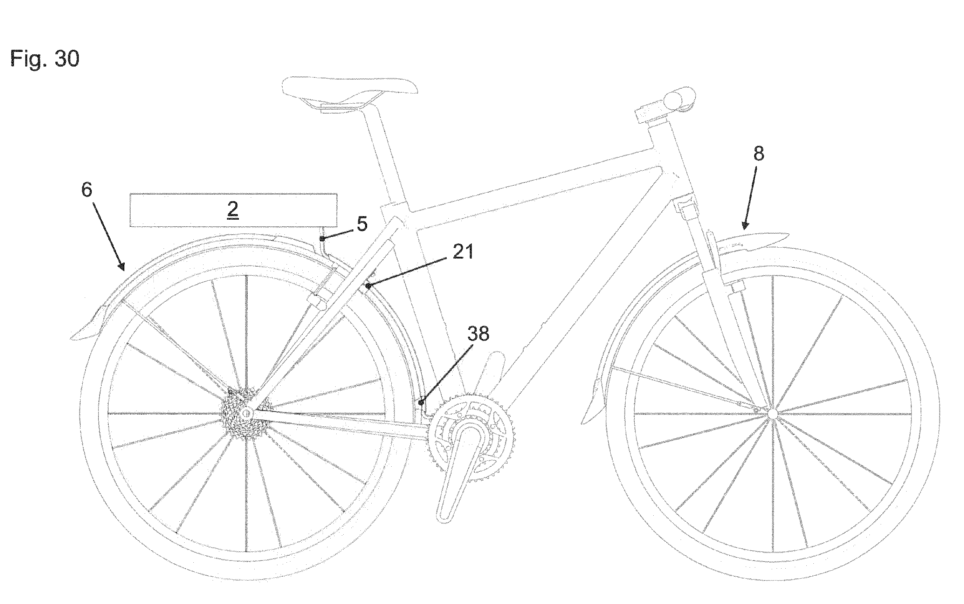

Die in den Fig. 30 bis 34 abgebildete Ausführungsform eines erfindungsgemäßen Radschützersatzes unterscheidet sich von der ersten Ausführungsform im Wesentlichen dadurch, dass die Montagereihenfolge von erstem und zweitem Teil 10, 11 vertauscht ist. Weiterhin wird nicht das zweite Teil 11, sondern das erste Teil 10 mit den Kettenstreben 16 verbunden.

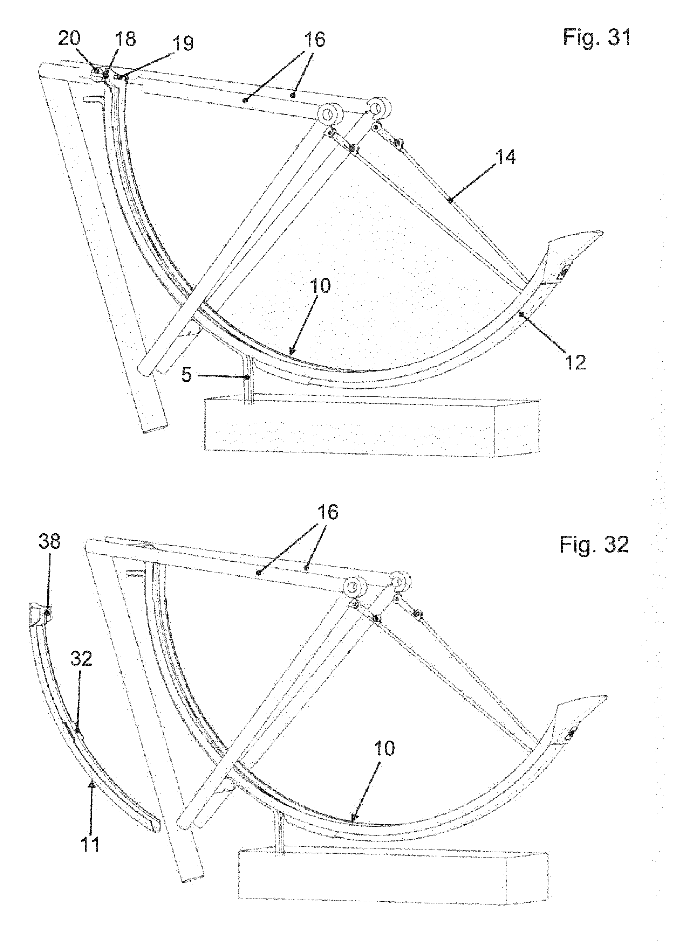

Fig. 31 zeigt diese Verbindung zwischen dem ersten Teil 10 mit dem die beiden Kettenstreben 16 verbindenden Teil 20, wobei diese Verbindung genauso gestaltet sein kann wie die in Fig. 3 abgebildete Verbindung zwischen dem zweiten Teil 11 und dem verbindenden Teil 20. Dabei kann das erste Teil 10 eine Öffnung 18 für den Hindurchtritt einer als Befestigungselement dienenden Schraube 19 aufweisen. Fig. 31 zeigt insbesondere einen Zustand, in dem das Kabel 5 bereits an dem ersten Teil 10 montiert ist.

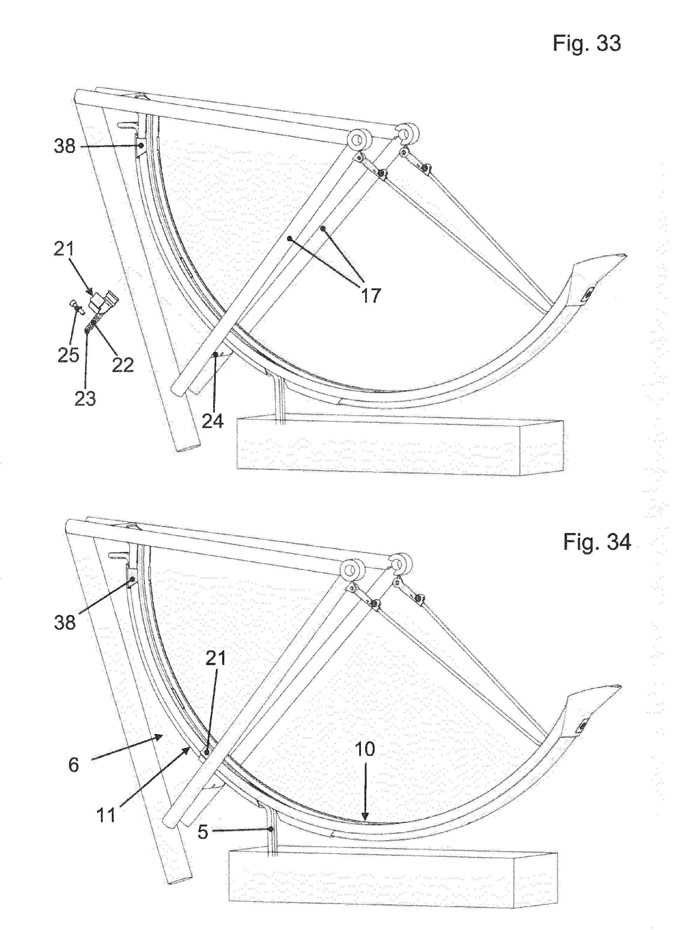

Fig. 32, Fig. 33 und Fig. 34 zeigen die Anbringung des zweiten Teils 11 an dem ersten Teil 10. Dafür weist das zweite Teil 11 eine Klammer 38 auf, die entweder mit dem zweiten Teil 11 verbunden oder verbindbar oder als integraler Bestandteil an dem zweiten Teil 11 ausgebildet ist. Die Klammer 38 ist dabei im Bereich des in Gebrauchsstellung unteren Endes des zweiten Teils 11 beziehungsweise in Fig. 32 im Bereich des oberen Endes des zweiten Teils 11 angeordnet. Fig. 33 zeigt, dass die Klammer 38 das erste Teil 10 umgreifen kann, so dass dadurch das zweite Teil 11 an dem ersten Teil 10 befestigt wird.

Das zweite Teil 11 kann weiterhin über eine Klammer 21 mit dem ersten Teil 10 verbunden werden, die der Klammer 21 gemäß Fig. 3 entspricht. Die in den Fig. 33 und 34 abgebildete Klammer 21 weist ebenfalls eine mit einer zweiten Öffnung 22 versehene Lasche 23 auf, die der Anbringung an einem die Sitzstreben 17 verbindenden Teil 24 dient. Auch für die Anbringung der Klammer 21 an dem Teil 24 wird eine als Befestigungselement dienende Schraube 25 verwendet, die in das die beiden Sitzstreben 17 verbindende Teil 24 eingebracht und an diesem festgelegt werden kann. Dazu kann beispielsweise an diesem Teil 24 eine Gewindebohrung vorgesehen sein.

In dem in den Fig. 32 bis 34 abgebildeten Montageschritten wird also das zweite Teil 11 in der Nähe des die Kettenstreben 16 verbindenden Teils 20 über eine Klammer 38 an dem ersten Teil 10 und über eine weitere Klammer 21 an dem die Sitzstreben 17 verbindenden Teil 24 angebracht.

Die Klammer 38 lässt sich leicht von dem ersten Teil 10 abnehmen, so dass dadurch der mit dem mindestens einen Kabel 5 versehene Hohlraum 35 zugänglich wird. Dies ist insbesondere bei vorzunehmenden Wartungen sehr vorteilhaft. Die Lösung der Verbindung zwischen Klammer 38 und erstem Teil 10 kann insbesondere werkzeuglos erfolgen, so dass im Wartungsfall auch ohne die Verwendung von Werkzeug auf den Hohlraum 35 beziehungsweise ein darin befindliches Kabel 5 zugegriffen werden kann.

Bis auf die beschriebenen Unterschiede gleichen sich die Radschützer der ersten und der zweiten Ausführungsform im Wesentlichen. Beispielsweise zeigt Fig. 32 ebenfalls die an dem zweiten Teil 11 ausgebildeten, als Befestigungselement dienenden Rastnasen 32. Weiterhin ist ebenfalls ein drittes Teil 12 vorgesehen, das in den Fig. 31 bis 34 bereits an dem ersten Teil 10 montiert ist. Das dritte Teil 12 kaschiert wie bei der ersten Ausführungsform die in den Fig. 31 bis 34 nicht abgebildete Öffnung 26 und den durch die Öffnung 26 hindurchragenden, ebenfalls nicht abgebildeten Befestigungsclips 15 für die Umlaufstrebe 14 (siehe Fig. 31).

## Patentansprüche

1. Radschützer (6) für ein Fahrrad (1), umfassend
- ein erstes Teil (10),
- ein zweites, mit dem ersten Teil (10) verbindbares Teil (11), wobei das erste und das zweite Teil (10, 11) im miteinander verbundenen Zustand einen Hohlraum (35) zwischen sich bilden, durch den mindestens ein Kabel (5) hindurchgeführt werden kann, wobei im am Fahrrad (1) montierten Zustand das erste Teil (10) auf der radial inneren Seite an den Hohlraum (35) grenzt und wobei im am Fahrrad (1) montierten Zustand das zweite Teil (11) auf der radial äußeren Seite an den Hohlraum (35) grenzt, sowie
- Verbindungsmittel für die Verbindung mindestens eines der Teile (10, 11) mit dem Fahrrad (1),
**dadurch gekennzeichnet, dass** Verbindungsmittel für die Anbringung an dem Rahmen des Fahrrads (1) an dem zweiten Teil (11) angeordnet sind.

2. Radschützer (6) nach Anspruch 1, **dadurch gekennzeichnet, dass** die Verbindungsmittel eine erste, an dem ersten Teil (10) oder an dem zweiten Teil (11) angeordnete, Öffnung (18) für den Hindurchtritt eines Befestigungselements, beispielsweise einer Schraube (19), aufweisen, wobei vorzugsweise die erste Öffnung (18) derart angeordnet ist, dass das Befestigungselement im montierten Zustand eine Verbindung mit der Kettenstrebe (16) des Fahrrads herstellen kann.

3. Radschützer (6) nach einem der Ansprüche 1 oder 2, **dadurch gekennzeichnet, dass** der Radschützer (6) mindestens eine Klammer (21, 38) umfasst, die an dem ersten und/oder an dem zweiten Teil (10, 11) angebracht werden kann, wobei die Klammer (21, 38) insbesondere das erste und das zweite Teil (10, 11) miteinander verbinden kann.

4. Radschützer (6) nach Anspruch 3, **dadurch gekennzeichnet, dass** die mindestens eine Klammer (21) oder eine der Klammern (21, 38) Teil der Verbindungsmittel ist und zur Verbindung des zweiten Teils (11) mit dem Rahmen des Fahrrads (1) dient.

5. Radschützer (6) nach einem der Ansprüche 1 bis 4, **dadurch gekennzeichnet, dass** die Verbindungsmittel eine, insbesondere an der Klammer (21) angeordnete, zweite Öffnung (22) für den Hindurchtritt eines Befestigungselements, beispielsweise einer Schraube (25), aufweisen, wobei vorzugsweise die zweite Öffnung (22) derart angeordnet ist, dass das Befestigungselement im montierten Zustand eine Verbindung mit der Sitzstrebe (17) des Fahrrads (1) herstellen kann.

6. Radschützer (6, 8) für ein Fahrrad (1), umfassend
- ein erstes Teil (10, 36),
- ein zweites, mit dem ersten Teil (10, 36) verbindbares Teil (11) und/oder ein drittes, mit dem ersten Teil (10, 36) verbindbares Teil (12, 37) wobei im am Fahrrad (1) montierten Zustand das erste Teil (10, 36) auf der radial inneren Seite angeordnet ist und das zweite Teil (11) und/oder das dritte Teil (12, 37) auf der radial äußeren Seite angeordnet ist oder sind, sowie
- Verbindungsmittel für die Verbindung mindestens eines der Teile (10, 11, 12, 36, 37) mit dem Fahrrad (1),
**dadurch gekennzeichnet, dass**
- an dem ersten Teil (10, 36) Verbindungsmittel angeordnet sind, die im miteinander verbundenen Zustand der Teile (10, 11, 12, 36, 37) von dem zweiten Teil (11) und/oder dem dritten Teil (12, 37) so abgedeckt werden, dass sie im am Fahrrad (1) montierten Zustand von der radial äußeren Seite nicht sichtbar sind, und/oder dass
- für die Verbindung des ersten mit dem zweiten Teil (10, 11) mindestens ein Befestigungselement vorgesehen ist, das von einem der beiden Teile (10, 11) ausgeht und durch das andere der beiden Teile (10, 11) zumindest teilweise hindurchgreift oder dieses zumindest abschnittsweise hintergreift.

7. Radschützer (6, 8) nach Anspruchs 6, **dadurch gekennzeichnet, dass** der Radschützer (6, 8) ein Radschützer (6, 8) nach einem der Ansprüche 1 bis 5 ist.

8. Radschützer (6, 8) nach einem der Ansprüche 6 oder 7, **dadurch gekennzeichnet, dass** die an dem ersten Teil (10, 36) angebrachten Verbindungsmittel eine Öffnung (26) an dem ersten Teil (10, 36) umfassen, durch die insbesondere ein Befestigungsclip (15) für eine Umlaufstrebe (14) hindurchgreifen kann, wobei die Umlaufstrebe (14) im am Fahrrad (1) montierten Zustand beidseitig des Rades in den Nabenbereich (13) geführt und dort befestigt ist.

9. Radschützer (6) nach einem der Ansprüche 6 bis 8, **dadurch gekennzeichnet, dass** das mindestens eine Befestigungselement an dem zweiten Teil (11) ausgebildet und/oder derart gestaltet ist, dass im miteinander verbundenen Zustand ein Verschieben der beiden Teile (10, 11) in Umfangsrichtung des Rades verhindert wird, wobei insbesondere das mindestens eine Befestigungselement als Rastnase (32) ausgebildet ist.

10. Radschützer (6) nach einem der Ansprüche 1 bis 9, **dadurch gekennzeichnet, dass** der Radschützer (6) ein drittes, mit dem ersten Teil (10) verbindbares Teil (12) aufweist, wobei insbesondere das dritte Teil (12) mit dem ersten Teil (10) keinen Hohlraum für ein Kabel (5) einschließt.

11. Radschützer (6) nach Anspruch 10, **dadurch gekennzeichnet, dass** das zweite Teil (11) und das dritte Teil (12) in Umfangsrichtung des Rades beabstandet oder versetzt zueinander an dem ersten Teil (10) befestigbar sind.

12. Radschützer (6) nach einem der Ansprüche 1 bis 11, **dadurch gekennzeichnet, dass** der Radschützer (6) für ein Hinterrad (7) eines Fahrrades (1) geeignet ist.

13. Radschützersatz, umfassend einen ersten, für ein Vorderrad (9) eines Fahrrades (1) geeigneten Radschützer (8) und einen zweiten, für ein Hinterrad (7) eines Fahrrades (1) geeigneten Radschützer (6), wobei ein jeder der Radschützer (6, 8) ein erstes Teil (10) sowie ein zweites und/oder ein drittes, mit dem ersten Teil (10) verbindbares Teil (11, 12) aufweist, **dadurch gekennzeichnet, dass** ein zweites und/oder drittes Teil (11, 12) des ersten Radschützers (8) einem zweiten und/oder dritten Teil (11, 12) des zweiten Radschützers (6) entspricht, insbesondere diesem gleicht, vorzugsweise genau so wie dieses ausgebildet ist.

14. Radschützersatz nach Anspruch 13, **dadurch gekennzeichnet, dass** im am Fahrrad (1) montierten Zustand das erste Teil (10) eines jeden der Radschützer (6, 8) auf der radial inneren Seite und dass das zweite und/oder das dritte Teil (11, 12) auf der radial äußeren Seite angeordnet ist.

15. Radschützersatz nach einem der Ansprüche 13 oder 14,
**dadurch gekennzeichnet, dass** der zweite Radschützer (6) ein Radschützer (6) nach einem der Ansprüche 1 bis 12 ist.
